## Europäisches Patentamt
## European Patent Office
## Office européen des brevets

(19)

(11) Veröffentlichungsnummer: **0 093 940**
**B1**

(12) **EUROPÄISCHE PATENTSCHRIFT**

(45) Veröffentlichungstag der Patentschrift:
**31.07.85**

(51) Int. Cl.⁴: **A 01 F 29/06,** B 02 C 18/18

(21) Anmeldenummer: **83104058.9**

(22) Anmeldetag: **26.04.83**

(54) **Gegenschneide für einen Messerkopf, insbesondere für Erntemaschinen.**

(30) Priorität: **07.05.82 US 376082**

(43) Veröffentlichungstag der Anmeldung:
**16.11.83 Patentblatt 83/46**

(45) Bekanntmachung des Hinweises auf die Patenterteilung:
**31.07.85 Patentblatt 85/31**

(84) Benannte Vertragsstaaten:
**AT BE CH DE FR GB IT LI NL**

(56) Entgegenhaltungen:
**DE - A - 2 400 944**
**US - A - 3 342 231**
**US - A - 4 061 284**

(73) Patentinhaber: **DEERE & COMPANY, 1 John Deere Road, Moline Illinois 61265 (US)**

(72) Erfinder: **Black, Robert Delno, Bladensburg Road, Ottumwa Iowa 52501 (US)**

(74) Vertreter: **Feldmann, Bernhard et al, DEERE & COMPANY European Office, Patent Department Steubenstrasse 36-42 Postfach 503, D-6800 Mannheim 1 (DE)**

**Beschreibung**

Die Erfindung bezieht sich auf eine Gegenschneide für einen Messerkopf, insbesondere für Erntemaschinen, wie Feldhäcksler, mit einer ersten Oberfläche, über die das zu zerkleinernde Gut geführt wird, und einer dazu im Winkel angeordneten Schneidoberfläche, die in ihrem Schnittpunkt mit der ersten Oberfläche eine Schneidkante bildet.

Feldhäcksler dienen dazu, das Gut vom Feld aufzunehmen, es zu zerkleinern und das zerkleinerte Gut in einen Sammelbehälter abzugeben. Hierbei besteht die Zerkleinerungsvorrichtung in der Regel aus einer zylinderförmigen, umlaufenden Messertrommel und einer davor stationär angeordneten Gegenschneide, so daß das zu zerkleinernde Gut zunächst über die Oberfläche der Gegenschneide geführt und dann zwischen ihrer Schneidkante und der Messertrommel in kleine Stücke geschnitten wird (US-A-4 061 284).

Bei der bekannten Gegenschneide ·(US-A 3 342 231), von der die Erfindung ausgeht, ist die Gegenschneide auf einem starken Traggestell gebettet, damit die Gegenschneide den beim Zerkleinern auftretenden Kräften standhalten kann. Um aber den beim Zerkleinern auftretenden Vibrationen und Gegenschneidenbeschädigungen entgegenzuwirken, soll die Gegenschneide auf ihrer ganzen Länge auf dem Traggestell aufliegen. Dies wird bei dieser Gegenschneide dadurch erreicht, daß das Traggestell nach oben ausgebogen ist und die Gegenschneide durch entsprechendes Biegen satt aufliegt. Hierdurch aber wird der zwischen Wassertrommel und Gegenschneide bestehende Freiraum ungleichmäßig, wodurch die Schneidleistung beeinträchtigt und die Schnittlänge unterschiedlich wird.

Demgegenüber wird die mit der Erfindung zu lösende Aufgabe in einer vibrationsfreien, einen exakten Sitz ermöglichenden Lagerung der Gegenschneide gesehen, die auch beim allerersten Einsatz einen konstanten Freiraum zum Messerkopf ermöglicht.

Diese Aufgabe ist nach der Erfindung dadurch gelöst worden, daß die Schneidkante anfänglich, d. h. vor Verschleißerscheinungen, konkav ausgebildet ist.

Hierbei ist es zweckmäßig, daß nicht nur die Schneidkante, sondern auch die Schneidoberfläche anfänglich, d. h. vor Verschleißerscheinungen, konkav ausgebildet ist.

Vorteilhaft kann eine zweite Schneidoberfläche der ersten Schneidoberfläche mit Abstand gegenüberliegend angeordnet und anfänglich, d. h. vor Verschleißerscheinungen, konkav ausgebildet sein.

Was das Verfahren zum Bilden der konkaven Flächen anbelangt so wird nach der Erfindung vorgeschlagen, daß die Konkavität maschinell eingearbeitet ist.

In der Zeichnung ist ein nachfolgend näher erläutertes Ausführungsbeispiel der Erfindung dargestellt. Es zeigt

Fig. 1 den die Erfindung aufweisenden Teil eines Feldhäckslers in Seitenansicht,

Fig. 2 eine Gegenschneide mit Einstellvorrichtung in Blickrichtung der Linie 2-2 in Fig. 1 gesehen,

Fig. 3 die Gegenschneide mit Traggestelll in Blickrichtung der Linie 3-3 in Fig. 2 gesehen.

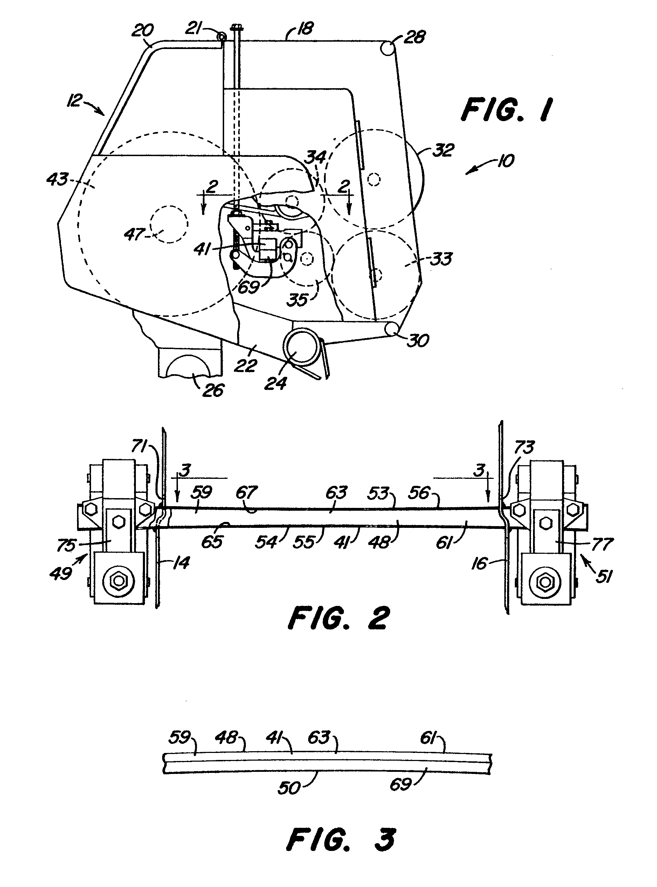

Die Erfindung ist an einem gezogenen Feldhäcksler vorgesehen, der auszugsweise in Fig. 1 dargestellt ist und einen fahrbaren Hauptrahmen 10 aufweist. Bei derartigen Feldhäckslern ist der Hauptrahmen in der Regel L-Förmig ausgebildet. Er wird über eine Deichsel an einen Ackerschlepper angehängt, und sein rückwärtiges Ende ist von Laufrädern getragen. An einem rückwärtigen äußeren Ende des Hauptrahmens 10 und zwar versetzt zum ziehenden Ackerschlepper, ist ein Schneidwerksgehäuse 12 angeordnet. Letzteres weist rechte und linke Seitenteile 14 und 16 und eine sich zwischen den Seitenteilen erstreckende Dachwand 18 auf, an deren rückwärtiges Ende eine die Breite des Schneidwerksgehäuses überspannende rückwärtige Klappe 20 angeschlossen ist. Diese ist um ein Scharnier 21 nach oben verschwenkbar, um einen Zugang von oben und rückwärts in das Innere des Schneidwerksgehäuses 12 zu ermöglichen. Zu dem Schneidwerksgehäuse gehören ferner im Bereich der Seitenteile 14 und 16 vorgesehene, aus Profileisen hergestellte Rahmenteile 22 und ein diese an ihren frontseitigen Enden miteinander verbindendes rohrförmiges und sich quer erstreckendes Rahmenteil 24. An den Hauptrahmen 10 sind ferner Radhalterungen 26 normalerweise unterhalb des Schneidwerksgehäuses 12 derart angeschlossen, daß die von ihnen aufgenommenen Laufräder seitlich außen neben den Seitenteilen 14 und 16 liegen.

Zum Anschluß von verschiedenen Erntevorsätzen, wie Aufsammelvorrichtung usw., sind an den Seitenteilen in deren oberen frontseitigen Bereich zwei nach außen gerichtete Anschlußbolzen 28 und in deren unteren frontseitigen Bereich ebenfalls zwei nach außen gerichtete Anschlußbolzen 30 vorgesehen. In Fig. 1 der Zeichnung sind jeweils nur die mit Bezug auf die Fahrtrichtung rechts liegenden dargestellt. Die Erntevorsätze dienen dazu, das Gut vom Feld aufzunehmen und es nach rückwärts in das offene Stirnende des Schneidwerksgehäuses 12 abzugeben. Hier wird das Gut von zwischen den Seitenteilen 14 und 16 angeordneten oberen und unteren Zuführwalzen 32, 33 erfaßt und zwischen zwei weitere obere und untere Zuführwalzen 34 und 35 geführt. Die unteren Zuführwalzen 33 und 35 sind dicht hintereinander in den Seitenteilen gelagert, aber nicht höhenverstellbar, während die oberen Zuführwalzen 32 und 34 in einer entsprechenden Vorrichtung zur vertikalen Höhenverstellung gelagert sind, damit der Abstand zwischen den oberen und unteren Zuführwalzen entsprechend der Gutmattendicke, die zwischen den Zuführwalzen hindurchgeführt wird, eingestellt werden kann. Im Einsatz laufen die oberen Zuführwalzen 32 und 34 im Uhrzeigerdrehsinn und die unteren Zuführwalzen 33 und 35 entgegen dem Uhrzeigersinn um.

Über die Zuführwalzen gelangt das Gut weiter über die Oberfläche 48 einer sich quer zwischen den Seitenteilen 14, 16, bzw. im Schneidwerksgehäuse 12 unmittelbar hinter der unteren Zuführwalze 35 erstreckenden Gegenschneide 41, die mit einer Messertrommel 43 oder einem Schneidwerkskopf zusammenarbeitet. Letzterer ist auf einer Welle 47 zwischen den Seitenteilen 14 und 16 angeordnet, antreibbar und kann wie der Messerkopf nach der US-PS 4 061 284 ausgebildet sein. Nur die äußere Peripherie des Messerkopfes ist in Fig. 1 in gestrichelten Linien angedeutet, die von den umlaufenden Schneidkanten der Messer gebildet wird. Die Messer selbst können über eine in der Zeichnung der Einfachheit halber nicht dargestellte Nachschleifvorrichtungen geschliffen werden. Eine geeignete Nachschleifvorrichtung ist in der US-PS 4 189 875 dargestellt.

Die Gegenschneide ist im Schneidwerksgehäuse 12 derart angeordnet, daß sie auf die Messertrommel 43 zu oder von ihr fort verstellt werden kann, um ihren Abstand zur Messertrommel einstellen zu können. Hierzu dienen zwei Halte- und Einstellvorrichtungen 49 und 51, über die die Enden der Gegenschneide mit den Seitenteilen verbindbar sind. Eine detaillierte Beschreibung einer solchen Halte- und Einstellvorrichtung findet sich in der US-PS 4 190 209.

Über die in den Fig. 2 und 3 dargestellte Oberfläche 48 der Gegenschneide 41 wird das Gut gefördert, bevor es zerkleinert wird. Um die Festigkeit und Widerstandsfähigkeit zu erhöhen, ist die obere Oberfläche 48 nach oben senkrecht zum Gutfluß ausgewölbt und eine erste Schneidoberfläche 53 und eine zweite Schneidoberfläche 55 (alternativ) sind quer zur oberen Oberfläche 48 angeordnet, so daß im Schnittpunkt der Oberfläche 48 mit der Schneidoberfläche 53 eine Schneidkante 54 und im Schnittpunkt der Oberfläche 48 mit der Schneidoberfläche 55 eine Schneidkante 56 (alternativ) entsteht. Ferner kann auch noch eine untere Oberfläche 50 vorgesehen werden, die nach einem Umdrehen, wenn die obere Oberfläche zuviel Verschleiß aufweist, zur Wirkung kommt. Auch die untere Oberfläche bildet mit den Schneidoberflächen Schneidkanten, die bei einem entsprechenden Umsetzen zur Wirkung kommen.

Die Gegenschneide 41 ist ferner noch mit relativ dünnen Schichten 65, 67 von sehr verschleißfesten, gegebenenfalls verstahlten Legierungen, wie beispielsweise Wolframkarbid, versehen, die in herkömmlicher Weise auf die Schneidoberflächen 53, 55 aufgebracht werden. Ein bevorzugtes Verfahren zum Aufbringen der Wolframkarbidschichten besteht darin, zunächst eine dünne Schicht pulverförmiges Wolframkarbid auf die die Schneidoberflächen bildenden Flächen aufzutragen und danach die Gegenschneide mit der Pulverschicht zu erhitzen, damit das Wolframkarbid mit der Gegenschneide verschmilzt. Hierbei kann die Konkavität in die Gegenschneide vor der Behandlung mit Wolframkarbid, aber auch danach eingearbeitet werden. Die Wolframkarbidschichten sollen dabei eine Stärke von vorzugsweise 0,01 cm aufweisen. Derartige Gegenschneiden sind in der US-PS 3 635 271 beschrieben.

Aus Fig. 3 ist zu ersehen, daß die Gegenschneide 41 auf einem Traggestell 69 aufliegt, wodurch die Festigkeit und Widerstandsfähigkeit der Gegenschneide 41 noch erhöht wird. Hierbei ist das Traggestell 69 als Stahlstange mit rechteckigem Querschnitt ausgebildet und erstreckt sich zwischen den Seitenteilen 14 und 16 des Schneidwerksgehäuses 12 unterhalb der Gegenschneide 41. Die Enden sowohl des Traggestells als auch der Gegenschneide sind durch Öffnungen 71, 73 in den Seitenteilen 14 und 16 geführt, wobei die Öffnungen ausreichend groß ausgebildet sind, um die Verstellung der Gegenschneide 41 aus dem Traggestell 69 auf die Messertrommel 43 zu oder von ihr fort zu bewerkstelligen. Dabei ist zumindest ein Teil einer Endkante einer Öffnung 71, 73 im Bereich des Traggestells 69, um ein Verschweißen des Traggestells mit den Seitenteilen 14 und 16 zu ermöglichen.

Auch das Traggestell ist bogenförmig gewölbt, wobei die Wölbung sich im wesentlichen vertikal zu einer Ebene durch die Achse der Welle 47 erstreckt. Die Gegenschneide 41 wurde anfangs mit ebenen oberen und unteren Oberflächen 48, 50 ausgebildet und wird, um weiter die Haltbarkeit, Festigkeit und Widerstandsfähigkeit zu erhöhen, mit dem Traggestell über Klemmvorrichtungen 75, 77 der Halte- und Einstellvorrichtungen 49 und 51 verspannt, um die gebogene Form des Traggestells anzunehmen.

Nach den Merkmalen der Erfindung ist die Schneidoberfläche 53 zu Anfang konkav in Richtung auf die Messertrommel, bevor sie nach längerem Einsatz im Häckselbetrieb verschleißt. Andererseits ist es bekannt, daß der Verschleißvorgang sich so auswirkt, daß die Schneidoberfläche dazu tendiert, konkav in Richtung auf die Messertrommel sich auszubilden. Die Ersatzschneidoberfläche 55 ist ebenfalls zu Anfang bereits konkav ausgestaltet, d. h. sie ist bereits konkav, bevor sie beginnt zu verschleißen. Die sich gegenüberliegenden Schneidoberflächen können damit alternativ als mit der Messertrommel zusammenarbeitende Schneidfläche Verwendung finden. Dies kann in einfacher Weise dadurch geschehen, daß, nachdem eine Schneidoberfläche, z. B. 53, durch Verschleiß unbrauchbar geworden ist, die Gegenschneide 41 ausgebaut und dann wieder so eingebaut wird, daß ihre Schneidoberfläche 55 der Messertrommel 43 zugelegen ist.

Es hat sich gezeigt, daß die konkave Ausbildung jeder Schneidoberfläche 53, 55 der Gegenschneide 41 eine verbesserte Gleichmäßigkeit des Abstands der Peripherie der Messertrommel 43 zu der Gegenschneide 41 ergibt. Dies ist leicht dann zu verstehen, daß, wenn man unterstellt, daß die Schneidoberfläche 53 eben ist, die Oberfläche 48 nach oben konvex gestaltet ist, so daß der Abstand zwischen der Messertrommel 43 und der Schneidkante 54 über die gesamte Länge der Gegenschneide leicht varriert. An ihren Enden 59 und 61 ist die Schneidkante 54 von der Peripherie der Messertrommel 43 weiter entfernt als in ihrer Mitte 63. Durch die konkave Ausbildung der Schneidoberfläche 53 wird die größere vertikale Höhe der Mitte 63 der Schneidkante 54 durch das nach innen Absetzen von der Messertrommel 43 fort kompensiert. Hieraus erhellt, daß durch sorgfältige Auswahl der Dimensionierung der in die Schneidoberflächen 53 und 55 eingearbeiteten Konkavität der unterschiedliche Abstand oder Freiraum, der somit infolge der konvexen Ausbildung der Oberfläche 48 vorhanden wäre, über die gesamte Länge der Gegenschneide 41 ausgeglichen oder kompensiert wird. Als Ergebnis ergibt sich ein gleichmäßiger Freiraum zwischen der Messertrommel und der Gegenschneide über deren gesamte Länge. Hierdurch wiederum läßt sich ein besserer Wirkungsgrad in der Schneidleistung und eine bessere Gleichförmigkeit des geschnittenen Gutes erreichen.

Als Bett für die Gegenschneide 41 dient eine Stahlstange in Form eines Traggestells 69 mit rechteckigem Querschnitt. Alle Oberflächen der Gegenschneide sind zu Anfang eben. Nach der Erfindung wird jede Schneidoberfläche 53, 55 maschinell bearbeitet, um die vorerwähnte Konkavität zu erreichen, die in einer Richtung verläuft, die im wesentlichen parallel zu der Oberfläche 48 verläuft, über die das Gut zum nachfolgenden Zerkleinern durch die Messertrommel 43 geführt wird. Danach wird auf die Schneidoberflächen 53, 55 eine pulverförmige Schicht Wolframkarbid aufgetragen und verschmolzen. Diese Schichten können bereits aufgetragen werden, bevor die Konkavität eingearbeitet wird.

Im ganzen gesehen erhält man somit eine Gegenschneide mit erhöhter Festigkeit und Haltbarkeit, die den beim Zerkleinern auftretenden Kräften besser standhält. Gleichzeitig kann eine solche Gegenschneide besser zur Peripherie der Messertrommel ausgerichtet werden. Hierdurch wiederum, d. h. durch verbesserte Genauigkeit des Freiraums infolge der konkav ausgebildeten Schneidoberflächen 53, 55, wird der zum Zerkleinern erforderliche Energiebedarf verringert und das Gut in gleichmäßigen Längen zerkleinert.

Die Erfindung wurde anhand eines bevorzugten Ausführungsbeispiels beschrieben, wobei darauf hinzuweisen ist, daß auch andere Modifikationen und Verbesserungen der Erfindung durchaus möglich sind.

**Patentansprüche**

1. Gegenschneide (41) für einen Messerkopf (43), insbesondere für Erntemaschinen, wie Feldhäcksler, mit einer ersten Oberfläche (48), über die das zu zerkleinernde Gut geführt wird, und einer dazu im Winkel angeordneten Schneidoberfläche (53), die in ihrem Schnittpunkt mit der ersten Oberfläche (48) eine Schneidkante (54) bildet, dadurch gekennzeichnet, daß die Schneidkante (54) anfänglich, d. h. vor Verschleißerscheinungen, konkav ausgebildet ist.

2. Gegenschneide (41) nach Anspruch 1, dadurch gekennzeichnet, daß die Schneidoberfläche (53) anfänglich, d. h. vor Verschleißerscheinungen, konkav ausgebildet ist.

3. Gegenschneide (41) nach Anspruch 1 oder 2, dadurch gekennzeichnet, daß eine zweite Schneidoberfläche (55) der ersten Schneidoberfläche (53) mit Abstand gegenüberliegend angeordnet und anfänglich, d. h. vor Verschleißerscheinungen, konkav ausgebildet ist.

4. Gegenschneide (41) nach einem oder mehreren der vorherigen Ansprüche, dadurch gekennzeichnet, daß die Konkavität maschinell eingearbeitet ist.

**Claims**

1. A counter-blade (41) for a cutter head (43), in particular for harvesters such as field chopping machines, comprising a first surface (48) over which the material to be cut up is passed, and a cutting surface (53) which is arranged at an angle thereto and which, at its point of intersection with the first surface (48), forms a cutting edge (54) characterised in that the cutting edge (54) is initially, that is to say, prior to wear occurring, of a concave configuration.

2. A counter-blade (41) according to claim 1 characterised in that the cuttig surface (53) is initially, that is to say, prior to wear occurring, of a concave configuration.

3. A counter-blade (41) according to claim 1 or claim 2 characterised in that a second cutting surface (55) is arranged at a spacing from and in opposite relationship to the first cutting surface (53) and is initially, that is to say, prior to wear occurring, of a concave configuration.

4. A counter-blade (41) according to one or more of the preceding claims characterised in that the concavity is formed by machining.

**Revendications**

1. Contre-lame (41) pour tête de coupe (43), en particulier pour machines de récolte telles que récolteuses-hacheuses, comportant une première surface (48) sur laquelle les produits de récolte devant être hachés sont acheminés et une surface de coupe (53) disposée angulairement par rapport à la précédente, qui forme une arête de coupe (54) à son point d'intersection avec la première surface (48), caractérisée en ce que l'arête de coupe (54) a initialement, c'est-à-dire avant l'apparition de phénomènes d'usure, une forme-concave.

2. Contre-lame (41) suivant la revendication 1, caractérisé en ce que la surface de coupe (53) a initialement, c'est-à-dire avant l'apparition de phénomènes d'usure, une forme concave.

3. Contre-lame suivant la revendication 1 ou 2, caractérisée en ce qu'une seconde surface de coupe (55) est opposée à la première surface de coupe (53) à une certaine di distance de celle-ci et a initialement, c'est-à-dire avant l'apparition de phénomènes d-usure, une forme concave.

4. Contre-lame (41) suivant l'une quelconque des revendications précédentes, caractérisée en ce que le profil concave est ménagé par usinage.

1/1

FIG. 1

FIG. 2

FIG. 3